# EUROPEAN PATENT APPLICATION

(11) **EP 1 049 087 A2**
(43) Date of publication of application: **02.11.2000**
(21) Application number: 00105974.0
(22) Date of filing: 24.03.2000
(51) Int. Cl.: G11B 20/00, G06F 1/00

(54) **Contents information recording method, contents information recording unit, contents information record reproduction method, contents information record reproduction unit and media therefor**

(30) Priority: 27.04.1999 JP 11959099
(71) Applicant: VICTOR COMPANY OF JAPAN, LTD., Yokohama-shi Kanagawa 221 (JP)
(72) Inventor: Sugahara, Takayuki, Yokosuka-shi, Kanagawa-ken (JP)
(74) Representative: HOFFMANN - EITLE

(57) **Abstract**

When contents data is recorded from medium A to medium B, if the recording is executed in the form of "transfer" mode, right information of the medium A loses reproduction right. At the same time, contents data recorded in the medium A and losing the reproduction right is deleted or the contents data is scrambled to a condition which cannot be restored.

## Description

### BACKGROUND OF THE INVENTION

### 1. Field of the Invention

The present invention relates to a contents information distribution system for recording and reproducing contents information.

The present invention aims to provide contents information recording method, contents information recording unit, contents information record reproduction method, contents information record reproducing unit and media therefor in contents information distribution system capable of distributing contents information (particularly audio or video data) and allowing user to transfer and reproduce data between media while preventing illegal transfer and reproduction of the distributed data.

### 2. Description of the Background Art

With a progress of enciphering technology, digital contents distribution management method, digital contents reproduction method and apparatus therefor have been proposed in Japanese Patent Application Laid-Open No.10-269289 as an effective method for distributing audio or video digital data through network. According to the present invention, a distribution side of digital contents processes and compresses digital contents and sends the processed digital contents, enciphered contents key and enciphered accounting information to communication receivers. Money collected based on contents use information sent from the communication receivers is distributed to privilege persons. On the other hand, a digital contents reproducing side deciphers that processed digital contents with the contents key and simultaneously expands it to reproduce the original data. Then, data on charge money depending on use of the contents and contents use information are sent to the contents information distribution side. The recorded contents can be carried away to other places.

Further, Japanese Patent Application Laid-Open No.9-25303 has disclosed an information recording media, recording unit, information transmission system and deciphering unit. The information recording media of the present invention contains enciphered information and enciphered key information obtained by enciphering key information for deciphering this enciphered information to its original information. Further, it contains condition information for deciphering the aforementioned enciphered information in a non-enciphered state. That is, because device information and region information are included in control information of the enciphered key information, duplication of the enciphered information into HDD or optical disk on user side for illegal use is prevented.

However, according to the above conventional described system, because media in which the contents data is recorded cannot be transferred between users (although the media itself can be transferred, the contents data recorded in that media cannot be reproduced properly), user needs to connect account control center, data management center or the like at least once in order to receive the contents data. Further, when a person has plural kinds of media, he cannot move data between the media or return the data to any medium after backup of the data while preventing illegal transfer and duplication.

### SUMMARY OF THE INVENTION

Accordingly, an object of the present invention is to provide a contents information recording method, contents information recording unit, contents information record reproduction method, contents information record reproducing unit and media therefor in contents information distribution system capable of distributing contents information and allowing user to transfer and reproduce data between media while preventing illegal transfer and reproduction of the distributed data.

To achieve the above object, according to a first aspect of the invention, there is provided a contents information recording method for recording a contents information from a first medium in which said contents information and right information indicating absence/presence of a right capable of reproducing said contents information are recorded, to a second medium, the method comprising the steps of: upon carrying out recording of said contents information from said first medium to said second medium, rewriting the right information of said first medium to right information indicating absence of reproduction right and recording the right information indicating presence of the reproduction right in said second medium; and deleting said contents information from said first medium or scrambling said contents information recorded in said first medium to a condition which cannot be restored.

Further, to achieve the above object, according to a second aspect of the invention, there is provided a contents information recording method for recording a contents information from a first medium in which said contents information and right information indicating absence/presence of a right capable of reproducing said contents information are recorded, to a second medium, the method comprising the steps of: upon carrying out recording of said contents information from said first medium to said second medium, keeping the right information of said first medium as the right information indicating presence of the reproduction right and recording right information indicating presence of the reproduction right in said second medium.

Further, to achieve the above object, according to a third aspect of the invention, there is provided a contents information recording method, wherein with the contents information recording method described in the first aspect as a first recording mode and a contents information recording method described in the second aspect as a second recording mode, the two recording modes are selectively executed.

Further, to achieve the above object, according to a fourth aspect of the invention, there is provided a contents information recording unit for recording a contents information from a first medium in which the contents information and right information indicating absence/presence of a right capable of reproducing the contents information are recorded, to a second medium, the contents information recording unit comprising: a right information processing means for, when recording of the contents information from the first medium to the second medium is carried out, rewriting the right information of the first medium to right information indicating absence of reproduction right and recording the right information indicating presence of the reproduction right in the second medium; and a contents information processing means for, when recording of the contents information from the first medium to the second medium is carried out, deleting the contents information from the first medium or scrambling the contents information recorded in the first medium to a condition which cannot be restored.

Further, to achieve the above object, according to a fifth aspect of the invention, there is provided a contents information recording unit for recording a contents information from a first medium in which the contents information and right information indicating absence/presence of a right capable of reproducing the contents information are recorded, to a second medium, the contents information recording unit comprising: a right information processing means for, when recording of the contents information from the first medium to the second medium is carried out, recording right information indicating presence of the reproduction right in the second medium while keeping the right information indicating presence of the reproduction right in the first medium.

To achieve the above object, according to a sixth aspect of the invention, there is provided a contents information recording unit comprising, with the contents information recording method described in the first aspect as a first recording mode and a contents information recording method described in the first aspect as a second recording mode, a selecting means for selecting the two recording modes.

To achieve the above object, according to a seventh aspect of the invention, there is provided a contents information recording method for recording a contents information from a first medium in which said contents information and right information indicating absence/presence of a right capable of reproducing said contents information are recorded, to a second medium, the method comprising the steps of: upon carrying out recording of said contents information from said first medium to said second medium, rewriting the right information of said first medium to right information indicating absence of reproduction right and recording the right information indicating presence of the reproduction right in said second medium.

To achieve the above object, according to a eighth aspect of the invention, there is provided a contents information recording unit for recording a contents information from a first medium in which the contents information and right information indicating absence/presence of a right capable of reproducing the contents information are recorded, to a second medium, the contents information recording unit comprising a right information processing means for, when recording of the contents information from the first medium to the second medium is carried out, rewriting the right information of the first medium to right information indicating absence of reproduction right and recording the right information indicating presence of the reproduction right in the second medium.

To achieve the above object, according to an ninth aspect of the invention, there is provided a contents information recording/reproduction method for recording and reproducing contents information into/from media, wherein as information relating to accounting which occurs when the contents information is recorded or reproduced in media as digital signal, at least one of individual accounting information of each contents information and total accounting information which is information of total value of accounting of each contents information is recorded.

According to a preferred embodiment of the invention, information relating to accounting which occurs when the contents information reproduced from the first medium is recorded into the second medium is selectively recorded in the first medium or the second medium.

According to a preferred embodiment of the invention, after liquidation of accounting is finished, the selection of a medium as a recording object of information relating to accounting is released.

To achieve the above object, according to a tenth aspect of the invention, there is provided a medium wherein each contents information and at least one of individual accounting information of each contents information and total accounting information which is information of total value of accounting of each contents information are recorded.

To achieve the above object, according to a eleventh aspect of the invention, there is provided a contents information recording/reproduction method for recording and reproducing contents information into/from media, the method comprising the steps of: recording accounting information of the contents information in the media; recording, in the media, digital output frequency information indicating a frequency of outputs of the contents information to other media as digital signal, ID information of its output destination medium, output date information, digital input frequency information indicating a frequency of recording of inputs of the contents information from other medium, ID information of its input destination medium, and input date information; and recording inhibit information indicating whether or not recording of the contents information in the medium and reproduction of the contents information from the medium are inhibited.

To achieve the above object, according to an twelfth aspect of the invention, there is provided a medium wherein accounting information of contents information; digital output frequency information indicating a frequency of outputs of the contents information to other media as digital signal, ID information of its output destination medium, output date information, digital input frequency information indicating a frequency of recording of inputs of the contents information from other medium, ID information of its input destination medium, and input date information; and inhibit information indicating whether or not recording of the contents information into the medium and reproduction of the contents information from the medium are inhibited; are recorded.

To achieve the above object, according to a thirteenth aspect of the invention, there is provided a contents information recording/reproduction method comprising the steps of: sending accounting information of contents information and digital output frequency information indicating a frequency of outputs of the contents information to other media as digital signal, ID information of its output destination medium, output date information, digital input frequency information indicating a frequency of recording of inputs of the contents information from other medium, ID information of its input destination medium, and input date information, from each medium to control center and recording these information in data base of the control center as media management data; inspecting a relation between media management data of an object medium and media management data of a mating medium executing digital input/output of contents information with the object medium before, and a relation between accounting condition of the object medium and the mating medium executing digital input/output of the contents information with the object medium before; and if any contraction is found out, registering ID of said object medium and ID of said mating medium in control center, and when a medium having any of the IDs is connected to the control center, recording, in the medium having any of the IDs, inhibit information indicating that all functions for recording and reproducing the contents information are inhibited.

According to a preferred embodiment of the invention, inhibit information indicating that a function for recording and reproducing the contents information is inhibited is recorded in a medium whose digital output frequency indicating a frequency of reproducing the contents information recorded as digital signal and outputting the contents information to other medium exceeds a predetermined value, and after liquidation of accounting is finished, said inhibit information is removed.

According to a preferred embodiment of the invention, all contents information recorded in the medium or part of the contents information is enciphered with a predetermined key for a medium whose digital output frequency indicating a frequency of reproducing the contents information recorded as digital signal and outputting the contents information to other medium exceeds a predetermined value, and after liquidation of accounting is finished, the encryption is solved.

According to a preferred embodiment of the invention, inhibit information indicating that a function for recording and reproducing the contents information is inhibited is recorded for a medium in which accounting value based on accounting information exceeds a predetermined value, and after liquidation of accounting is finished, the inhibit information is removed.

According to a preferred embodiment of the invention, all contents information recorded in medium or part of the contents information is enciphered with a predetermined key for a medium in which accounting value based on accounting information exceeds a predetermined value and after liquidation of accounting is finished, the encryption is solved.

According to a preferred embodiment of the invention, upon recording enciphered contents information from a first medium to a second medium, when the contents information recorded in said second medium is in a condition which can be reproduced in said second medium, it is regarded to be a duplication which is an object of accounting and accounting processing is carried out, and when the contents information recorded in said second medium is in a condition which cannot be reproduced in said second medium, it is regarded to be backup which is not an object of accounting and no accounting processing is carried out.

According to a preferred embodiment of the invention, if the contents information is non-compression data which is permitted to be duplicated on the premise of accounting, the accounting upon duplicating of the contents information is carried out based on a figure set inherently in the contents information or a figure obtained depending on compression rate for compression-encoding the contents information, and the accounting information is recorded in medium of contents information duplication source or contents information duplication destination.

According to a preferred embodiment of the invention, if the contents information is compression data which is permitted to be duplicated on the premise of accounting, the accounting upon duplicating of the contents information is carried out based on a figure set inherently in the contents information or a figure obtained depending on compression rate for recompression-encoding the contents information, and the accounting information is recorded in medium of contents information duplication source or contents information duplication destination.

The nature, principle and utility of the invention will become more apparent from the following detailed description when read in conjunction with the accompanying drawings.

### BRIEF DESCRIPTION OF THE DRAWINGS

In the accompanying drawings:
Fig.1 is a diagram showing a relation between data base and terminals of the center according to an embodiment;
Figs.2A to 2H are a diagram for explaining recording styles according to an embodiment of the present invention;
Fig.3A is a diagram showing a data file structure of an embodiment;
Fig.3B is a diagram showing a log file structure of an embodiment;
Figs.4A to 4C are a diagram showing an example of log file data according to an embodiment;
Figs.5A, 5B are a diagram for explaining a compression rate and accounting money rate according to an embodiment;
Fig.6 is a block diagram according to an embodiment for recognizing a duplication permission code;
Fig.7 is a block diagram showing an embodiment using contents accounting money data base;
Fig.8 is an explanatory diagram showing an example of data structure according to an embodiment using feature data;
Fig.9 is an explanatory diagram showing a concept of an embodiment using the feature data;
Fig.10 is a diagram showing a structure of an embodiment; and
Fig.11 is a block diagram showing a detailed structure of an embodiment.

### DESCRIPTION OF THE PREFERRED EMBODIMENTS

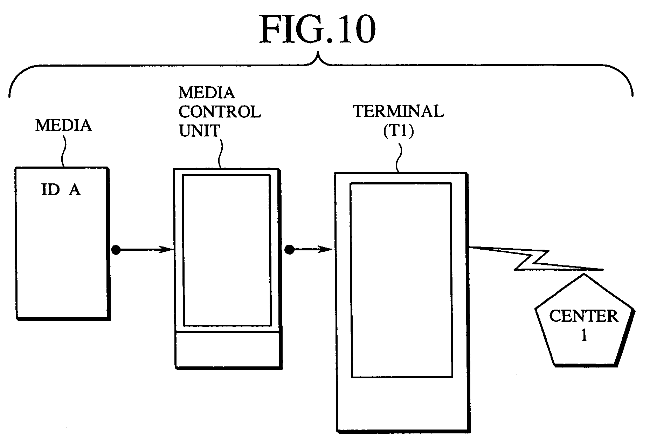

First, an embodiment of the configuration of the present invention will be described with reference to Fig.10. An medium has an ID inherent of itself and can be set in a media control unit. The media mentioned here needs to enable recording and reproduction and include a solid memory, disc, tape and the like as long as its inherent ID can be set therein. In this case, the ID information must have a predetermined tamper resistance. That is, it is desirable that the ID and a key necessary for encryption are in a storage condition difficult to read or rewrite them illegally.

The simplest example is a memory type. By using it, a memory card, from which the ID or enciphered key information cannot be extracted unless a predetermined memory control unit is used, can be produced easily with safety. An inherent ID is recorded in each memory card at the time of production in plant. Alternatively, when the memory card is published by a publicizing unit, an ID inherent of that memory is recorded in EEPROM or the like and the EEPROM is buried by sealing resin or the like. As a result, user corresponding information cannot be changed after that. That is, illegal change is prevented.

A media control unit in which a medium is set and which is connected to a terminal of PC or other specialized device has an interface function between the medium and terminal, and functions for enciphering and deciphering of data under a predetermined ID. The media control unit has tamper resistance inhibiting illegal access to inside of the memory from the terminal. The terminal is connected to a center disposed outside for distributing contents information (distribution center) and distributes the contents data after predetermined procedures for accounting, certification and the like are finished. Connecting means to the center includes ISDN, broadcasting, cable TV and radio as well as network system like internet.

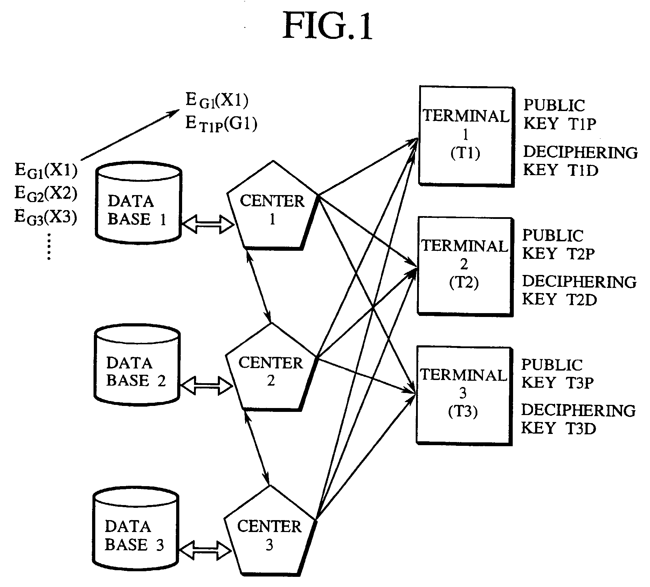

The contents information is enciphered with a basically different key (contents key) depending on the contents. After compressed in a predetermined compression system like MPEG, the contents ares subject to encryption based on DES (data encryption standard) or the like. For example, in case of the DES, the enciphering key is about 64 bits. Fig.1 shows a relation between the data base, center and terminal. The contents information, for example, contents X1 are enciphered with an enciphering key G1 in data base installed in the center and other contents X2 are enciphered with an enciphering key G2.

A plurality of terminals are connected to this center via network. Transmission to the terminal is carried out in encryption by public key system considering the security. Here, assuming that the public key of the terminal 1 (T1) is T1P and the deciphering key is T1D, contents X1 managed by the data base 1 are enciphered with enciphering key G1 so as to produce enciphered contents information called E_{G1}(X1). The enciphering key G1 is enciphered with the public key T1P of the terminal T1 to transmit to the terminal T1 so that this key is converted to enciphered key information E_{T1P}(G1). Then, both the enciphered contents information E_{G1}(X1) and enciphered key information E_{T1P}(G1) are sent to the terminal 1 (T1).

To reproduce the contents information at the terminal 1, the enciphered key information E_{T1P}(G1) is deciphered with the deciphering key T1D of the terminal 1 to obtain the enciphering key G1. Then, the enciphered contents information E_{G1}(X1) is deciphered with that enciphering key G1 to obtain contents X1 and then MPEG deciphering or the like is carried out to reproduce the original information. However, in a description made in this specification, it is assumed that transmitted data is not reproduced but recorded in media connected to the terminal. Although data transmission up to the terminal with the public key has been described here, the present invention substantially can support not only the common key system but also other key system or a case where ciphering is not carried out in media.

Although in a following description, it is assumed that the contents information is not ciphered, it is desirable to establish the security of contents by some kind of ciphering system in practical use.

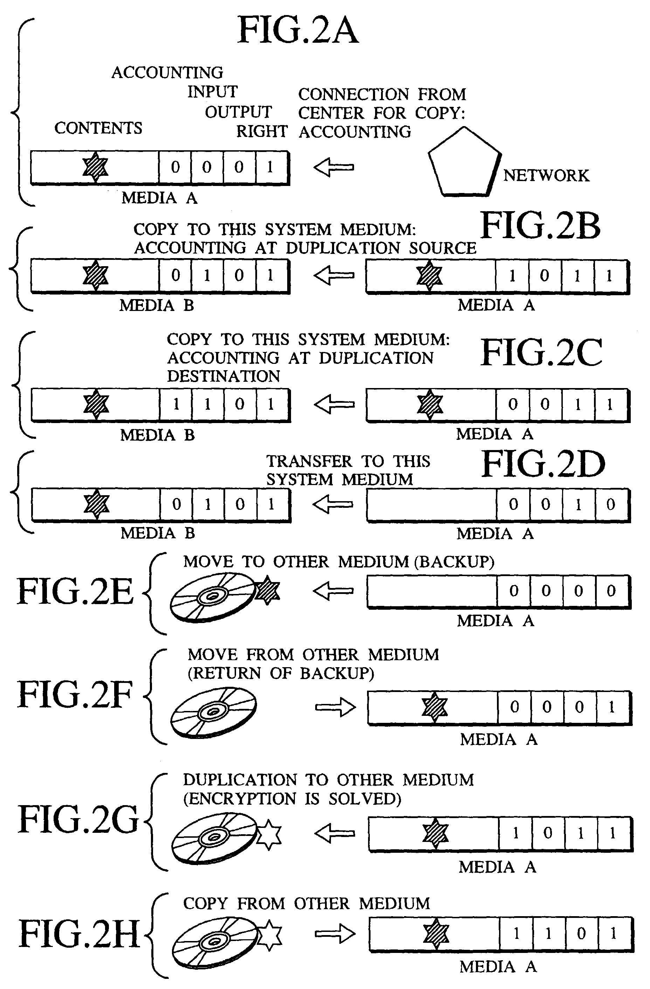

Next, concept of duplication and transfer of the contents data according to an embodiment will be described with reference to Fig.2. An object of this embodiment is to record the contents data in media and account for the data. Further, another object of this embodiment is to provide a system which enables duplication and transfer between media and if duplication is executed, carries out a predetermined accounting.

Management data is attached to the contents data as a header. An operation of four important control informations thereof will be described below.

Fig.2A shows a condition when the contents data is down-loaded from network. A black star mark indicates the contents data. At this time, reproduction right exists in media A and "1" indicating that reproduction right exists is described as right information (right flag). Because data is received by connecting to the network, it is assumed that accounting has been already done and then, liquidation is finished so that individual accounting information (accounting flag) is "0".

As for information about input and output, if digital data is inputted to medium A and recorded therein, digital input frequency information (input flag) of medium A is incremented by 1. If digital data is reproduced from medium A and outputted, the digital input frequency information (output flag) of medium A is incremented by 1.

Fig.2B indicates a case where the contents data is duplicated from medium A (first medium) to medium B (second medium) of this system. Because data is outputted from the medium A, the output flag is incremented by 1. Because data is inputted to the medium B, the input flag is incremented by 1. Which duplication source accounting or duplication destination accounting is carried out is selected from an external interface so as to enable accounting at any one of A and B. In case of B of the same Figure, duplication source accounting is selected so that accounting flag of medium A is incremented by 1. Assuming that as for accounting, a song costs 200 yen, +1 of the accounting flag means 200 yen. However, if accounting value differs depending on contents, it is permissible to use +1 as unit of 100 yen and increment by a corresponding amount (+2 for 200 yen).

Because Fig.2C shows duplication destination accounting, the accounting flag of medium B is incremented by +1. Because the contents data can be reproduced in both media after duplication, the right flags of both media are "1" indicating that reproduction right exists.

Fig.2D indicates a case in which the contents data is transferred from medium A to medium B. Although the output relation is the same as Figs.2B and 2C, the reproduction right of the medium A is lost (the right flag is "0" indicating that the reproduction right does not exist) and instead, the reproduction right is generated in the medium B (the right flat is "1" indicating that the reproduction right exists.). In this case, it is necessary to diminish the contents data in the medium A. Thus, when writing of the contents data into the medium B by a media control unit which will be described later is finished, the object contents data is deleted or scrambled to disable restoration of the data by a memory information record deletion control portion. Even if the contents data is diminished from the medium A by the transfer, management data (right flag, accounting flag and the like) is left, and when that media is connected to network and procedure for accounting or the like is finished, the management data is deleted.

Fig.2E shows a case in which data is backed up in other media. Because this other media cannot be connected directly to the media control unit, basically, the data cannot be reproduced. Therefore, this is treated as back-up other than duplication and transfer of data. Digital input frequency information and digital output frequency information for a backup medium are omitted in Figs.2E to 2H, the control thereof is carried out. Here, each flag for accounting, input, output and right is "0" and like Fig.2D, when writing of the contents data into the backup medium by the media control unit described later is finished, the contents data of an object in the medium A is deleted or scrambled to disable restoration of the data by the memory information record deletion control portion. After the backup, the contents data is diminished and management data is left in the medium A, and when the medium A is connected to network and procedure for accounting or the like is finished, the management data is deleted.

Fig.2F shows a case in which data backed up in Fig.2E is returned. If data is returned, the contents data is recorded after a management data having a coinciding contents name and then, "1" indicating that the reproduction right exists is returned to the right flag.

Fig.2G shows a case in which data is duplicated in other medium. In this case, the data is duplicated such that it can be reproduced in the other medium. For example, although the contents are ciphered with information about media ID so that it cannot be reproduced by other media, in this case encryption is solved so as to duplicated the data. In this case, the reproduction right in the medium A is kept as it is (the right flag is kept at "1") and the output flag and accounting flag are incremented by +1.

Fig.2H shows a case in which data is duplicated from other media and recorded in the medium A. In this case, only the contents data which is permitted to be reproduced can be recorded. The input flag and accounting flag in management data of the medium A are incremented by +1.

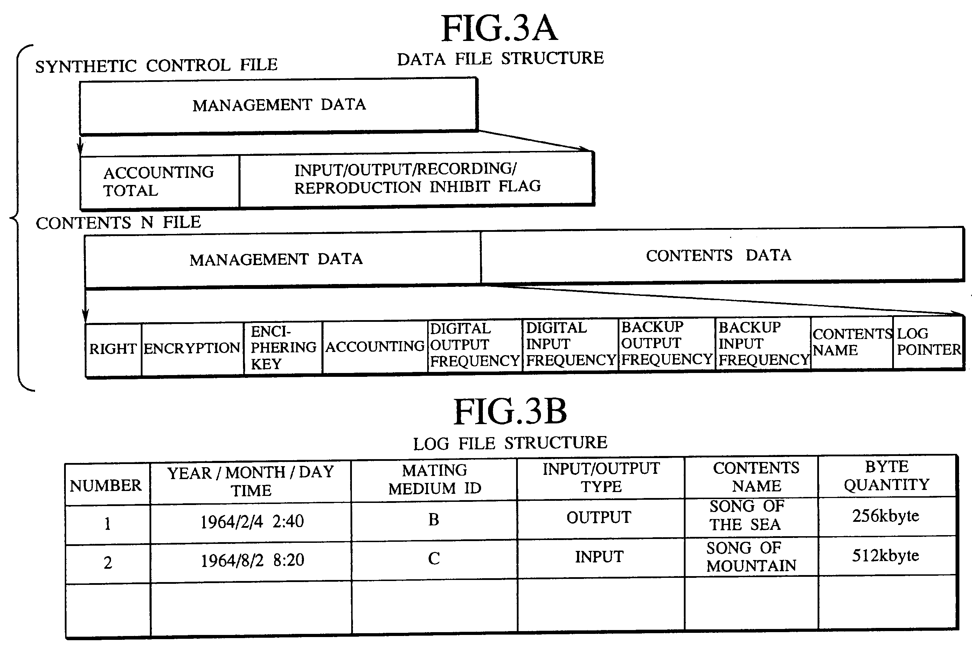

Next, a detail of the data file structure will be described with reference to Fig.3A. Assume that N contents data exist in a single medium. The management data is recorded in each contents data. Each contents file is comprised of the management data and contents data. In addition to this control data, accounting total flag of 32 bits for the entire medium and input/output/record/reproduction inhibit flag 1 bit are recorded in the medium as a synthetic control file. The input/output/record/reproduction inhibit flag is information indicating whether record and reproduction of the contents data is inhibited to that medium.

The management data attached to a header of each contents includes right flag (whether or not reproduction right exists) of 1 bit, ciphering flag (whether or not the contents are ciphered) of 1 bit, ciphering key flag (key recorded when ciphering is executed) of 64 bits, accounting flag (accounting frequency or value) of 32 bits, digital output frequency flag (frequency of outputs of reproduced contents data to other media for this system as digital data) of 16 bits, backup output frequency flag (frequency of reproduced contents data to backup media as digital data) of 16 bits, backup input frequency flag (frequency of recording of contents data inputted from the backup media as digital data) and log pointer (log file name or pointer).

The digital output frequency flag and digital input frequency flag concern accounting. Whether or not there is contradiction is determined as a result of certification at a center described later and if there is such a contradiction, the input/output/record/reproduction inhibit flag of the synthetic control file is set to "1" indicating that record and reproduction of the contents data is inhibited. If the frequency is too large although there is no contradiction, all the contents are enciphered with a key set preliminarily in the media control unit so as to disable reproduction of data at users temporarily. Then, when center accounting is carried out, the enciphered contents are deciphered. If the accounting value based on the accounting flag exceeds a predetermined value, all the contents are enciphered with the key set preliminarily in the media control unit so as to disable reproduction of data at users temporarily. Then, when center accounting is carried out, the enciphered contents are deciphered.

Although the frequency of input/output to the backup media is not directly related to accounting, if illegal backup is carried out, it can be considered that the frequency increases extremely. If the backup output frequency flag and backup input frequency flag exceed a predetermined value, the input/output/record/reproduction inhibit flag of the synthetic control file is set to "1". If the input/output/record/reproduction inhibit flag of the synthetic control file is set to "1" it is possible to disable use of that media without restoring its function even if the accounting for data is accomplished, until a predetermined procedure for releasing the input/output/record/reproduction inhibit flag is carried out.

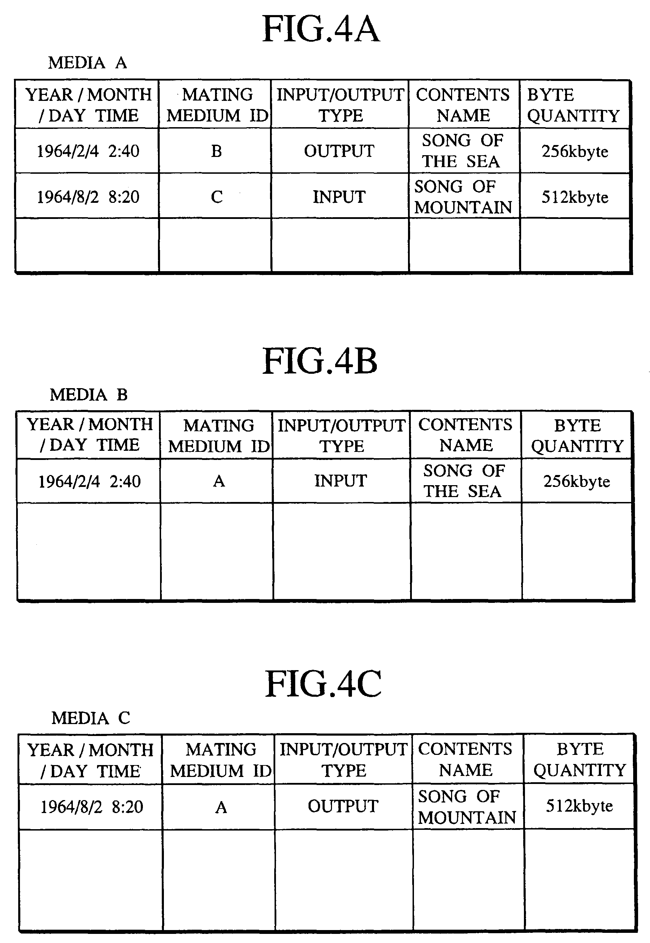

A log file structure will be described with reference to Fig.3. The log file indicates when and what processing this medium carried out to which medium and is recorded in the medium. As shown in Figs.4A, 4C, with a log number, year, month, day, time in which the processing is carried out of 40 bits, mating media ID of 64 bits, input/output type of 1 bit, contents name of 128 byte and byte count of 16 bits are recorded.

When each medium is connected to the control center through network, contents data accounting information, right information, digital output frequency information, and digital input frequency information in management data of each medium and output destination medium ID information, output date information, input source medium ID information and input date information in log file of each medium are sent to the control center and recorded in data base of the control center as media management data. A relation between media management data of an object medium and media control data of a mating medium in which the contents data of the object medium was digitally inputted or outputted before, and a relation of accounting condition between the object medium and a mating medium in which the contents information of the object medium was digitally inputted or outputted before are inspected. If a contradiction is found, the object medium ID and the mating medium ID are registered in the control center. When a medium having that ID is connected to the center, the input/output/record/reproduction inhibit flag of the synthetic control file is set to "1" for all media having that ID so as to inhibit all functions for recording and reproduction of the contents data.

This contradiction detection method will be described with reference to Figs.4A to 4C. If the medium A is connected to the center, information described in the medium A of Fig.4A is notified to the center through the aforementioned log file. Likewise, the medium B and medium C are notified to the center at a different timing. The timing of connecting to the center differs depending on user. Because basically new contents data cannot be obtained unless duplication between media is carried out, each medium is connected to the center periodically. Further, if the frequency of duplication between media exceeds a predetermined value as described above, the function is stopped unless that medium is connected to the center so as to liquidate for accounting. Thus, any medium absolutely needs to be connected to the center. These media A, B, C are inspected to see whether or not input/output of data at the same year, month, day and time, contents name and byte count coincide. Accounting processing is carried out only when the accounting bit recorded in the contents information is set to "1". Although the accounting total value of the synthetic control file is a total value of accounting of respective contents, it is permissible not to account for money paid preliminarily to this medium and start from a minus value such that accounting information is accounted for since a residual money becomes 0.

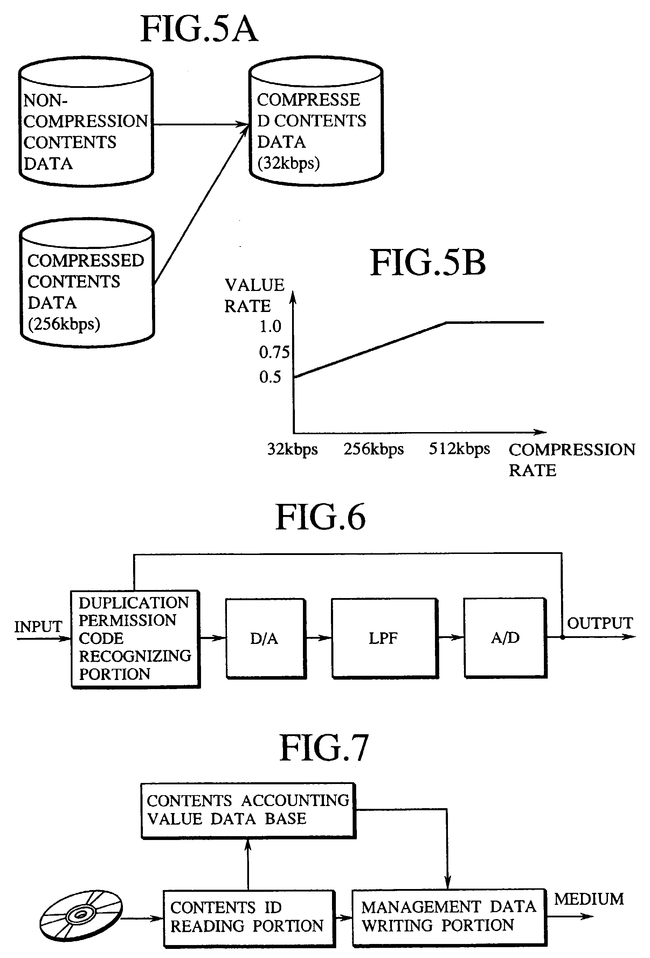

Next, if the contents data is permitted to be duplicated on the premise of accounting, it can be considered that accounting is executed depending on contents quality. That is, the reason for this is that because when the contents are compressed, if coding rate is lowered extremely, the contents quality is deteriorated, therefore the account is lowered. Two cases can be considered for this. As shown in Fig.5A, there are cases where the contents are non-compressed contents data and compressed data. In this case, for example in case of audio, accounting money rate is 1.0 up to 512 Kbps in graph shown in Fig.5B and the accounting money rate is set to 0.5 at 32 Kbps and then, an interval between the two is constructed with a proportional relation. Consequently, if the non-compressed contents data is recorded at 32 Kbps, accounting 0.5 times its original accounting money is carried out. In case of the compressed contents data, if a contents data of, for example, 256 Kbps is recorded at 32 Kbps, accounting value is 0.67 times calculated from 0.5/0.75.

Next, if the contents data has no digital reproduction permission on a premise of accounting, a code indicating whether or not the contents are permitted to be reproduced is recognized by a duplication permission code recognizing portion provided in the media control unit as shown in Fig.6. As a result, if the permission is recognized, the contents are outputted as it is. If the permission is not recognized, the contents are converted from digital to analog by a D/A converter, subjected to a processing such as LPF accompanied with quality deterioration and then the contents are converted again from analog to digital by an A/D converter.

If contents recorded in other media are duplicated in media of the present invention as seen in Fig.2H, this case comes to be equal to a case where that contents are purchased newly. Thus, accounting is carried out to media of the present invention when duplication is done. Fig.7 shows a concrete configuration. In contents inputted from other media, for example, in audio data, each music has its inherent ID like ISRC. This ID is recognized by the contents ID reading portion. The recognized contents ID retrieves its accounting value through contents accounting value data base and sends a result to management data writing portion, so that information of accounting for the contents management data in media of the present invention is described. Accordingly, a justifiable accounting is performed when it is connected to the center next time.

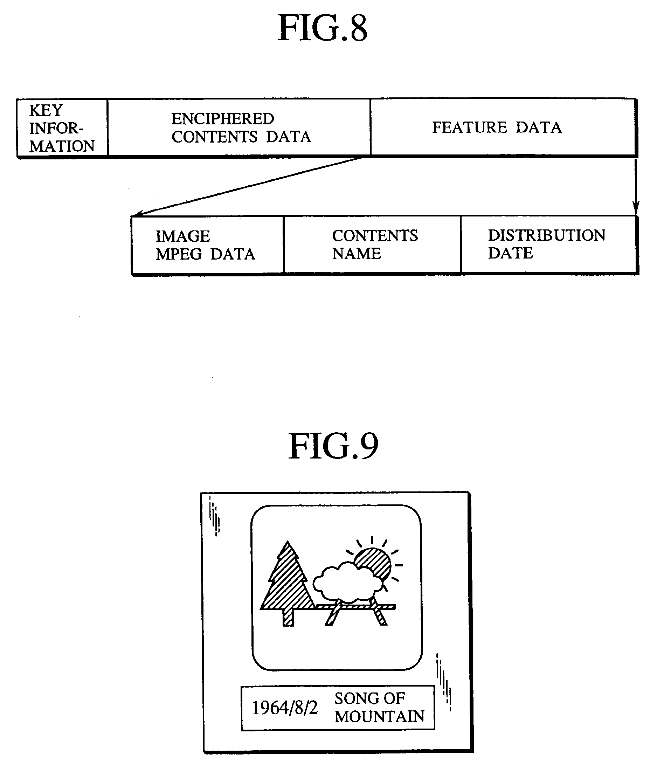

If contents data to be distributed is like movie containing video signal, an image of a feature scene or audio data is attached to the contents data upon distribution. Basically, the contents data is enciphered so that a processing for deciphering this data so as to extract data at a specific place is complicated. Therefore, a non-ciphered feature data is attached. As shown in Fig.8, the feature data is attached after the ciphered contents data. The content of the feature data is, for example, data of distribution year, month and day recorded in a static image in which a feature scene of that movie is MPEG or JPEG compressed by a frame.

A printer which is notified of a structure of this data and contains a program for deciphering the feature data according to that structure and printing the distribution year, month and day data to a predetermined place is capable of printing a label which is easily understood by user and can be attached to media. Further, audio data can be attached to the feature data. In this case, when that data is sent from the center to a terminal, audio data and video data indicating that feature scene may be reproduced. As a result, this is available as a function for introducing an outline of the contents to user intending to down load that contents data.

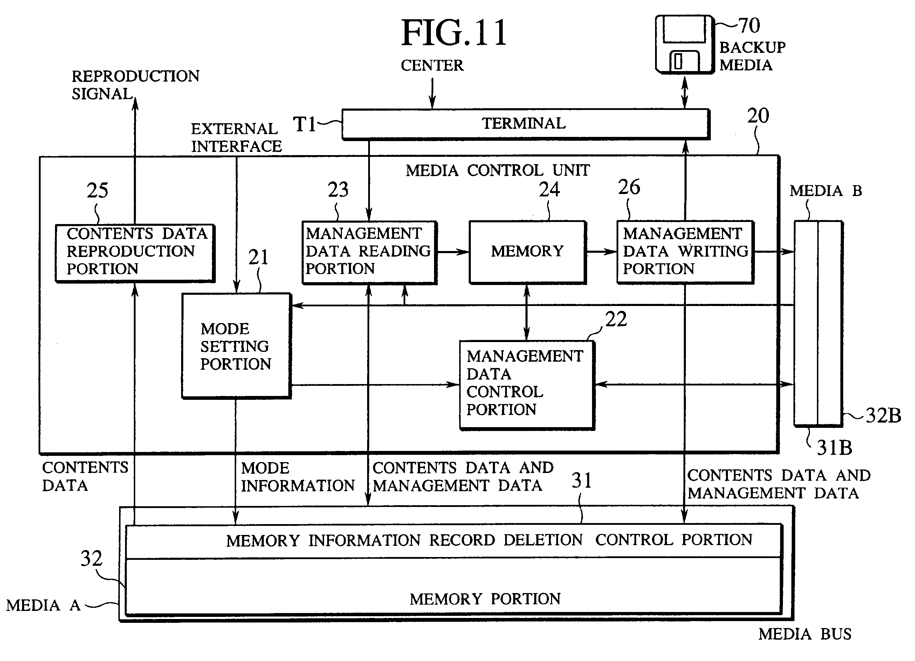

Next, a block diagram of the embodiment of the present invention will be described with reference to Fig.11. First, a case where the contents data is to be received from the distribution center to a medium A will be described. First of all, the media A is set in the media control unit 20. The media control unit 20 is set in the terminal T1 and then, "data recording mode" is set in the mode setting portion 21 of the media control unit 20 from an external interface. The mode setting portion 21 sends information about the set mode to the management data control portion 22 and memory information record deletion control portion 31 of the medium A.

If a predetermined procedure for accounting, certification and the like is completed, the contents data is sent from the center to the terminal T1. The management data reading portion 23 reads various management data, log file data and synthetic control file shown in Figs.3A, 3B of the contents data and records them in a memory 24. If accounting is liquidated, accounting total (total accounting information) is reset to "0". As for the management data in the contents header, the right flag is set to "1", accounting flag is set to "0", input/output frequency related flag is set to "0" and log information is reset. At the same time, the various management data, log file data and synthetic control file are sent to the memory information record deletion control portion 31. In case of "data recording mode", the media information record deletion control portion 31 records those data in a memory portion 32 of the medium A as they are.

Next, a case where the contents data recorded in the medium A is to be reproduced will be described. "Data reproduction mode" is set in the mode setting portion 21 of the media control unit 20 from the external interface. The mode setting portion 21 sends mode information to the memory information record deletion control portion 31. The memory information record deletion control portion 31 reads the contents data from the memory portion 32 and sends it to a contents data reproduction portion 25. The contents data reproduction portion 25 reproduces the contents data and outputs reproduction signals to outside.

Next, a case for duplicating the contents data from the medium A to the medium B will be described below. "Data duplication output mode" is set in the mode setting portion 21 of the media control unit 20 from the external interface. Regarding accounting, "no-accounting mode" (duplication destination accounting) is set. The mode setting portion 21 sends set mode information to the management data control portion 22 and memory information record deletion control portion 31 of the medium A. The memory information record deletion control portion 31 reads the contents data from the memory portion 32 and sends it to the management data reading portion 23. The management data reading portion 23 records various management data, log file data and synthetic control file shown in Figs.3A, 3B of the contents data. The management data control portion 22 recognizes information of duplication destination medium B ID and changes the management data relating to duplication in the memory 24, such as digital output frequency, increment of information about accounting and the like, year, month and day of log file, mating medium ID, input/output type, contents name, and contents byte quantity. After that, the management data writing portion 26 writes management data into the header of the contents data, sends it to the memory information record deletion control portion 31 of the medium A and then returns it to the memory portion 32 of the medium A.

Next, "data duplication input mode" is set in the mode setting portion 21 of the media control unit 20 from the external interface in order to record the contents data in the medium B. As for accounting, "accounting mode" is set by force corresponding to "no-accounting mode" and "data duplication output mode" of the medium A. The mode setting portion 21 sends information of the set mode to the management data control portion 22 and the memory information record deletion control portion 31B of the medium B. The management data writing portion 26 generates a log file from information recorded in the memory 24 and sends management data to be written into the header of the contents data with right flag "1", accounting flag "1" and digital input frequency +1 together with the contents data to the memory record deletion control portion 31B. Then, they are recorded in the memory portion 32B of the medium B.

Next, a case for transferring the contents data from the medium A to the medium B will be described. "Data transfer output mode" is set in the mode setting portion 21 of the media control unit 20 from the external interface. Because no accounting is carried out, the accounting mode is neglected. The mode setting portion 21 sends information of the set mode to the management data control portion 22 and memory information record deletion control portion 31 of the medium A. The memory information record deletion control portion 31 sends the contents data read from the memory portion 32 to the management data reading portion 23. The management data reading portion 23 records various management data, log file data and synthetic control file shown in Figs.3A, 3B of the contents data into the reading memory 24. The management data control portion 22 recognizes information of duplication source medium B ID, increments information of digital output frequency in the management data about transfer in the memory, sets right to "0" and changes year, month and day of log file, mating medium ID, input/output type, contents name and contents byte quantity. After that, the management data writing portion writes the management data into the header of the contents data, sends it to the memory information record deletion control portion 31 of the medium A and returns it to the memory of the medium A. In case of "data transfer output mode" the contents data is deleted from the medium A so that only the management data is left.

Next, "data transfer input mode" is set in the mode setting portion 21 of the media control unit 20 from the external interface in order to record the contents data into the medium B. As for accounting, "no-accounting mode" is set by force corresponding to "data transfer output mode" of the medium A. The mode setting portion 21 sends information of the set mode to the management data control portion 22 and memory information record deletion control portion 31B of the medium B. The management data writing portion 26 generates a log file from information recorded in the memory and sets right to "1" and increments digital input frequency with +1 for the management data to be written into the header of the contents data. Then, the management data is sent to the memory information record deletion control portion 31B of the medium B with the contents data and recorded in the memory portion 32B of the medium B.

Next, a case for backing up the contents data from the medium A to other medium will be described below. "Data backup output mode" is set in the mode setting portion 21 of the media control unit 20 from the external interface. Because no accounting is carried out, the accounting mode is neglected. The mode setting portion 20 sends information of the set mode to the management data control portion 22 and the memory information record deletion control portion 31 of the medium A. The memory information record deletion control portion 31 sends the contents data read from the memory portion 32 to the management data reading portion 23. The management data reading portion 23 records various management data, log file data and synthetic control file shown in Figs.3A, 3B of the contents data in the memory 24. The management data control portion 22 increments information of backup output of the management data about the backup output in the memory 24, sets right to "0" and changes year, month, day of the log file, input/output type, contents name and contents byte quantity. Because the backup media 70 has no ID, "0xffff" indicating predetermined other medium is described as the mating medium ID. After that, the management memory writing portion 26 writes the management data into the header of the contents data and sends it to the backup media 70 through the terminal T1. At the same time, the contents data in which new management data is written is sent to the memory information record deletion control portion 31 of the medium A and returned to the memory portion 32 of the medium A. Then, because "data backup output mode" is selected, the contents data is deleted from the memory portion 32 so that only the management data is left in the memory portion 32.

Next, a case for backing up the contents data from the backup medium 70 to the medium B will be described. "Data backup input mode" is set in the mode setting portion 21 of the media control unit 20 from the external interface. Because no accounting is carried out, the accounting mode is neglected. The contents data read from the backup medium 70 is sent to the media control unit 20 through the terminal T1 and then, the management data of the header portion of the contents data is read out by the management data reading portion 23 and memorized in the memory portion 24.

Because "data backup input mode" is set in the mode setting portion 21 of the medium B, "no-accounting mode" is set by force. The mode setting portion 21 sends the set mode information to the management data control portion 22 and memory information record deletion control portion 31B of the medium B. The management data writing portion 26 generates a log file from information recorded in the memory 24, and sets right flag to "1" and increments the backup input frequency by +1 in the management data to be written into the header of the contents data. The log file and management data are sent to the memory information record deletion control portion 31B of the medium B with the contents data and recorded in the memory portion 32B of the medium B.

Next, a case for duplicating the contents data from the medium A to other medium will be described. "Data other media duplication output mode" is set in the mode setting portion 21 of the media control unit 20 from the external interface. As for accounting under this mode, "accounting mode" is set by force. The mode setting portion 21 sends information of the set mode to the management data control portion 22 and memory information record deletion control portion 31 of the medium A. The memory information record deletion control portion 31 sends the contents data to the management data reading portion 23. The management data reading portion 23 records various management memory, log file data and synthetic control file shown in Figs.3A, 3B of the contents data into the memory 24. The management data control portion 22 increments information of digital output and sets right flag to "1" and changes year, month, day of the log file, input/output type, contents name and contents byte quantity in the management data about digital output in the memory 24. Because other medium has no ID, "0xffff" indicating predetermined other medium is described as the mating medium ID. After that, the management data writing portion 26 writes the management data into the contents data header and the contents data is sent to other medium through the terminal T1. At the same time, the contents data is sent to the memory information record deletion control portion 31 of the medium A and returned to the memory portion 32 of the medium A.

Next, a case for duplicating the contents data from other medium to the medium B will be described. "Data other medium duplication input mode" is set in the mode setting portion 21 of the media control unit 20 from the external interface. As for accounting in this mode, "accounting mode" is set by force. The mode setting portion 21 sends information of the set mode to the management data control portion 22 and memory information record deletion control portion 31B of the medium B. The management data reading portion 23 reads the management data of the contents data read from other medium and memorizes it in the memory 24. The mode setting portion 21 sends the set mode information to the management data control portion 22 and the memory information record deletion control portion 31B of the medium B. The management data writing portion 26 generates a log file from information recorded in the memory 24, and sets right flag to "1", sets accounting flag to "1" and increments the digital input frequency by 1 in the management data to be written into the header of the contents data. Then, the log file and management data are sent to the memory information record deletion control portion 31B of the medium B with the contents data and recorded in the memory portion 32B of the medium B.

As described above, this embodiment has the following effects.
- According to the recording/reproduction method for recording/reproducing the contents of each predetermined unit in a recordable medium, when each contents is recorded, information about whether or not there is a right for reproducing that contents are recorded, and when the contents are reproduced, the right information is detected. Only when there is a reproduction right, reproduction is permitted. Thus, it is possible to provide a system for transfer or duplication depending on the right information.
- When the contents information is copied from the medium A to the medium B, if the copy is carried out in the from of "transfer", the right information of the medium A loses reproduction right. At the same time, contents data recorded in the medium A and losing the right is deleted or scrambled in a condition which cannot be restored. Thus, data remaining in medium after transfer can be prevented from being used illegally.
- According to the recording/reproduction method for recording/reproducing the contents of each predetermined unit in a recordable medium, digital output frequency information indicating a frequency of outputs of that contents to other media as digital signal, digital input frequency information indicating a frequency of inputs of the contents from other media as digital signal, digital output frequency information indicating a frequency of outputs of the contents to other media as digital backup signal, digital input frequency information indicating a frequency of inputs of the contents from other media as digital backup signal, ID information of media subject to input/output, input/output data information, information indicating inhibition of input/output/recording/reproduction function and information indicating inhibition of input/output/recording/reproduction function with respect to the contents of entire medium are recorded. Therefore, the input/output frequency of the contents information and its date can be managed in an entire system.
- According to the recording/reproduction method for recording/reproducing the contents of each predetermined unit in a recordable medium, information about accounting generated due to input and record or output of the contents as digital signal is recorded for each contents or information about accounting is recorded as total information of plural contents in an entire medium. Thus, accounting value can be indicated easily to user having that medium or procedure for accounting is simplified.
- A direction for accounting when the contents information is copied from the medium A to the medium B can be selected from a case in which the accounting is executed at the medium A and a case in which the accounting is executed at the medium B. Therefore, when user having the medium A presents contents information to user having the medium B, the user having the medium A can select an accounting mode, so that diversified use methods of user can be satisfied.
- Accounting information recorded in the medium A is changed so that accounting is executed, when that information is inputted and recorded in the medium A from the contents distribution center or when the information is copied such that accounting is applied to the medium A upon a copy thereof from the medium A to the medium B. After the accounting is liquidated, that accounting information is reset. Thus, accounting value stored as accounting information until the medium is connected to the center after a previous connection can be liquidated when that medium is connected to the center.
- When data is copied from a reproduction specialized medium A to the medium B, it is copied such that accounting is applied to the medium B and the accounting information of the medium B is changed such that accounting is applied. After the accounting is liquidated, the data is reset. Thus, when contents of an accounting object in a reproduction specialized medium are copied, proper accounting is enabled by using accounting information of a copy destination medium.
- In the accounting processing, accounting is not carried out for a preliminarily paid value and accounting is applied to the accounting information when the remaining figure becomes 0. Thus, user holds a predetermined value as an initial value like a prepaid card, and when the remaining figure becomes 0, he can change that system to a method in which accounting is carried out at the time of next connection to the center using the accounting information.
- Because the accounting processing is carried out only when information indicating accounting exists in the contents information, if the contents are copy free or an image recorded from a movie himself is copied, it is possible to skip accounting.
- Accounting information of an object medium, digital output frequency information, digital input frequency information, ID of medium subject to input/output, date information, and right information when the medium is connected to the center managing distribution or accounting, are recorded in data base of the center. A relation between an object medium and data of a mating medium executing digital input/output before and a contradiction in accounting condition between the two are inspected. If any contradiction is found, IDs of both media are registered. If a medium having that ID is connected to the center, all functions about medium input/output/recording/reproduction is stopped. Thus, input/output frequency of the contents information and its date can be recognized in an entire system. If an illegal use is found by discovering that contradiction, the medium function can be temporarily stopped using information indicating that the function of input/output data recording/reproduction is inhibited.
- If the digital output frequency information indicating a frequency of outputs of the contents to other medium as digital signal exceeds a predetermined value, information indicating that the function for input/output/recording/reproduction is inhibited is changed to "inhibit". After the accounting is liquidated, that "inhibit" is released. If it is determined that there is a possibility that illegal digital copy was carried out many times, it is possible to stop the function and urge for a proper accounting.
- If the digital output frequency information indicating a frequency of outputs of the contents to other medium as digital signal exceeds a predetermined value, an entire medium or part thereof is enciphered with a predetermined key, and after the accounting is liquidated, the encryption is solved. Thus, even if the contents information, whose function has been stopped, is tried to be picked out illegally, the security is further intensified because data is enciphered.
- If the accounting information exceeds a predetermined value, information indicating that all the functions for media input/output/record/reproduction are inhibited is changed to "inhibit". After liquidation of the accounting is finished, that information is removed. Thus, if it is determined that there is a possibility that illegal digital copies have been carried out many times, it is possible to stop the function and urge for a proper accounting.
- If the accounting information exceeds a predetermined value, the entire medium or part thereof is enciphered with a predetermined key. After the liquidation of the accounting is finished, the encryption is solved. Thus, even if the contents information, whose function has been stopped, is tried to be picked out illegally, the security is intensified because data is enciphered.
- According to the recording/reproduction method for recording/reproducing contents enciphered in predetermined unit in a recordable medium, when enciphered contents are copied from the medium A to the medium B, if the medium B is in a condition which can be reproduced, it is regarded to be copy which is an object of accounting and then accounting processing is carried out. If the copy condition is a condition which cannot be reproduced in the medium B, it is regarded to be backup which is not an object of accounting and the accounting processing is not carried out. Therefore, even if the enciphered data is copied in a non-reproducible medium, namely, for example PC hard disk, that data cannot be deciphered. Thus, it is regarded as a just backup data and it is not treated as an object of the accounting.
- According to an introduced accounting system, if the contents are non-compression data which is permitted to be copied on the premise of accounting, the accounting is carried out based on a figure set inherently in the contents or a figure obtained from information relating to compression rate for compression-encoding the contents. That figure is recorded in media as contents information and therefore, if the accounting may be changed depending on the quality of the contents, that value can be determined according to a value about rate of the compression, so that user may select it depending on a balance between the figure and quality.
- If the contents are non-compression data which is permitted to be copied on the premise of accounting, the accounting is carried out based on a figure set inherently in the contents or a figure which can be obtained from information relating to compression rate for compression-encoding the contents. Thus, even if original contents are compressed, its value can be determined according to a value relating to rate for recompression and therefore, user may select the rate widely depending on a balance between the figure and quality.
- If the contents are data not permitted to be digitally copied, the contents are converted to analog data and after a predetermined filtering processing, the analog data is converted to digital data again and recorded in media. Thus, it is possible to deteriorate the original quality and then copy by lowering the value.
- If the contents are non-compression data not permitted to be copied on the premise of accounting, the accounting is carried out based on a figure set inherently of the contents. Thus, it is possible to apply accounting equivalent to when that contents are purchased newly.
- Because the contents are distributed with data indicating a feature content of the contents data, after the contents information is received, various convenient functions such as a function for retrieving easily to find out what the contents are available.
- If the contents data is data including images, the feature data indicating a content such as a predetermined frame using part of the contents data, animation information of several seconds, sub-sampled image of those image data, year/month/day, and contents name is used to create a predetermined label. If the contents data is data including audio data, the feature data indicating a content such as audio information of a predetermined time using part of the contents data, year/month/day, and contents name is used to create a predetermined label. Therefore, a label indicating what the contents are can be created easily for a medium recording that contents.
- According to the recording/reproduction method for recording/reproducing contents of predetermined unit in a recordable medium, upon recording, encryption information indicating whether or not the contents has been enciphered is recorded in a portion other than the enciphered region of each contents. Upon reproduction, the encryption information is detected and only if there is encryption information, the ciphered information is deciphered. Thus, an enciphered area can be specified easily so that the reproduction apparatus may be simplified.

In conclusion, according to the present invention, it is possible to transfer and duplicate contents information recorded in media while preventing illegal transfer and duplication thereof and further for user to obtain the contents information without connecting to accounting control center, data control center or the like. Further, in case where the contents information is transferred or duplicated between users, right information indicating right for reproduction can be recorded.

Further, according to the present invention, if a user has plural media, he can move the contents information between those media or after backing it up temporarily, return the contents information to any medium while illegal transfer or duplication is prevented.

It should be understood that many modifications and adaptations of the invention will become apparent to those skilled in the art and it is intended to encompass such obvious modifications and changes in the scope of the claims appended hereto.

## Claims

1. A contents information recording method for recording a contents information from a first medium in which said contents information and right information indicating absence/presence of a right capable of reproducing said contents information are recorded, to a second medium, the method comprising the steps of:
upon carrying out recording of said contents information from said first medium to said second medium, rewriting the right information of said first medium to right information indicating absence of reproduction right and recording the right information indicating presence of the reproduction right in said second medium; and
deleting said contents information from said first medium or scrambling said contents information recorded in said first medium to a condition which cannot be restored.

2. A contents information recording method for recording a contents information from a first medium in which said contents information and right information indicating absence/presence of a right capable of reproducing said contents information are recorded, to a second medium, the method comprising the steps of:
upon carrying out recording of said contents information from said first medium to said second medium, keeping the right information of said first medium as the right information indicating presence of the reproduction right and recording right information indicating presence of the reproduction right in said second medium.

3. A contents information recording method, wherein with the contents information recording method recited in claim 1 as a first recording mode and a contents information recording method recited in claim 2 as a second recording mode, the two recording modes are selectively executed.

4. A contents information recording unit for recording a contents information from a first medium in which said contents information and right information indicating absence/presence of a right capable of reproducing said contents information are recorded, to a second medium, said contents information recording unit comprising:
a right information processing means for, when recording of said contents information from said first medium to said second medium is carried out, rewriting the right information of said first medium to right information indicating absence of reproduction right and recording the right information indicating presence of the reproduction right in said second medium; and
a contents information processing means for, when recording of said contents information from said first medium to said second medium is carried out, deleting said contents information from said first medium or scrambling said contents information recorded in said first medium to a condition which cannot be restored.

5. A contents information recording unit for recording a contents information from a first medium in which said contents information and right information indicating absence/presence of a right capable of reproducing said contents information are recorded, to a second medium, said contents information recording unit comprising:
a right information processing means for, when recording of said contents information from said first medium to said second medium is carried out, recording right information indicating presence of the reproduction right in said second medium while keeping the right information indicating presence of the reproduction right in said first medium.

6. A contents information recording unit comprising, with the contents information recording method recited in claim 1 as a first recording mode and a contents information recording method recited in claim 2 as a second recording mode, a selecting means for selecting the two recording modes.

7. A contents information recording method for recording a contents information from a first medium in which said contents information and right information indicating absence/presence of a right capable of reproducing said contents information are recorded, to a second medium, the method comprising the steps of:
upon carrying out recording of said contents information from said first medium to said second medium, rewriting the right information of said first medium to right information indicating absence of reproduction right and recording the right information indicating presence of the reproduction right in said second medium.

8. A contents information recording unit for recording a contents information from a first medium in which said contents information and right information indicating absence/presence of a right capable of reproducing said contents information are recorded, to a second medium, said contents information recording unit comprising:
a right information processing means for, when recording of said contents information from said first medium to said second medium is carried out, rewriting the right information of said first medium to right information indicating absence of reproduction right and recording the right information indicating presence of the reproduction right in said second medium.

9. A contents information recording/reproduction method for recording and reproducing contents information into/from media, wherein as information relating to accounting which occurs when the contents information is recorded or reproduced in media as digital signal, at least one of individual accounting information of each contents information and total accounting information which is information of total value of accounting of each contents information is recorded.

10. A contents information recording/reproduction method according to claim 9, wherein information relating to accounting which occurs when the contents information reproduced from the first medium is recorded in the second medium is selectively recorded into said first medium or said second medium.

11. A contents information recording/reproduction method according to claim 10, wherein after liquidation of accounting is finished, the selection of a medium as a recording object of information relating to accounting is released.

12. A medium wherein each contents information and at least one of individual accounting information of each contents information and total accounting information which is information of total value of accounting of each contents information are recorded.

13. A contents information recording/reproduction method for recording and reproducing contents information into/from media, the method comprising the steps of:
recording accounting information of the contents information in the media;
recording, in the media, digital output frequency information indicating a frequency of outputs of the contents information to other media as digital signal, ID information of its output destination medium, output date information, digital input frequency information indicating a frequency of recording of inputs of the contents information from other medium, ID information of its input destination medium, and input date information; and
recording inhibit information indicating whether or not recording of the contents information in the medium and reproduction of the contents information from the medium are inhibited.

14. A medium wherein
accounting information of contents information;
digital output frequency information indicating a frequency of outputs of the contents information to other media as digital signal, ID information of its output destination medium, output date information, digital input frequency information indicating a frequency of recording of inputs of the contents information from other medium, ID information of its input destination medium, and input date information; and
inhibit information indicating whether or not recording of the contents information into the medium and reproduction of the contents information from the medium are inhibited;
are recorded.

15. A contents information recording/reproduction method comprising the steps of:
sending accounting information of contents information and digital output frequency information indicating a frequency of outputs of the contents information to other media as digital signal, ID information of its output destination medium, output date information, digital input frequency information indicating a frequency of recording of inputs of the contents information from other medium, ID information of its input destination medium, and input date information, from each medium to control center and recording these information in data base of the control center as media management data;
inspecting a relation between media management data of an object medium and media management data of a mating medium executing digital input/output of contents information with the object medium before, and a relation between accounting condition of the object medium and the mating medium executing digital input/output of the contents information with the object medium before; and
if any contraction is found out, registering ID of said object medium and ID of said mating medium in control center, and when a medium having any of the IDs is connected to the control center, recording, in the medium having any of the IDs, inhibit information indicating that all functions for recording and reproducing the contents information are inhibited.

16. A contents information recording/reproduction method according to claim 9, wherein inhibit information indicating that a function for recording and reproducing the contents information is inhibited is recorded in a medium whose digital output frequency indicating a frequency of reproducing the contents information recorded as digital signal and outputting the contents information to other medium exceeds a predetermined value, and after liquidation of accounting is finished, said inhibit information is removed.

17. A contents information recording/reproduction method according to claim 9, wherein all contents information recorded in the medium or part of the contents information is enciphered with a predetermined key for a medium whose digital output frequency indicating a frequency of reproducing the contents information recorded as digital signal and outputting the contents information to other medium exceeds a predetermined value, and after liquidation of accounting is finished, the encryption is solved.

18. A contents information recording/reproduction method according to claim 9, wherein inhibit information indicating that a function for recording and reproducing the contents information is inhibited is recorded for a medium in which accounting value based on accounting information exceeds a predetermined value, and after liquidation of accounting is finished, said inhibit information is removed.

19. A contents information recording/reproduction method according to claim 9, wherein all contents information recorded in medium or part of the contents information is enciphered with a predetermined key for a medium in which accounting value based on accounting information exceeds a predetermined value, and after liquidation of accounting is finished, the encryption is solved.

20. A contents information recording/reproduction method according to claim 9, wherein, upon recording enciphered contents information from a first medium to a second medium, when the contents information recorded in said second medium is in a condition which can be reproduced in said second medium, it is regarded to be a duplication which is an object of accounting and accounting processing is carried out, and when the contents information recorded in said second medium is in a condition which cannot be reproduced in said second medium, it is regarded to be backup which is not an object of accounting and no accounting processing is carried out.

21. A contents information recording/reproduction method according to claim 9, wherein if the contents information is non-compression data which is permitted to be duplicated on the premise of accounting, the accounting upon duplicating of the contents information is carried out based on a figure set inherently in the contents information or a figure obtained depending on compression rate for compression-encoding the contents information, and the accounting information is recorded in medium of contents information duplication source or contents information duplication destination.

22. A contents information recording/reproduction method according to claim 9, wherein if the contents information is compression data which is permitted to be duplicated on the premise of accounting, the accounting upon duplicating of the contents information is carried out based on a figure set inherently in the contents information or a figure obtained depending on compression rate for recompression-encoding the contents information, and the accounting information is recorded in medium of contents information duplication source or contents information duplication destination.
